Europäisches Patentamt

European Patent Office

Office européen des brevets

(19)

(11) Veröffentlichungsnummer: **0 086 865**
**A2**

(12) # EUROPÄISCHE PATENTANMELDUNG

(21) Anmeldenummer: 82105116.6

(22) Anmeldetag: 11.06.82

(51) Int. Cl.³: **H 04 B 7/14**
H 04 L 1/14, H 04 B 1/54

(30) Priorität: 20.02.82 DE 3206133

(43) Veröffentlichungstag der Anmeldung:
31.08.83 Patentblatt 83/35

(84) Benannte Vertragsstaaten:
AT BE DE FR GB IT NL

(71) Anmelder: ROBERT BOSCH GMBH
Postfach 50
D-7000 Stuttgart 1(DE)

(72) Erfinder: Gorzel, Heribert, Dipl.-Ing.
Forstweg 33 c
D-1000 Berlin 28(DE)

(72) Erfinder: Schulz, Hans-Joachim, Dipl.-Ing.
Pfeddersheimer Weg 50
D-1000 Berlin 38(DE)

(74) Vertreter: Schmidt, Hans-Ekhardt
Robert Bosch GmbH Geschäftsbereich Elektronik
Patent- und Lizenzabteilung Forckenbeckstrasse 9-13
D-1000 Berlin 33(DE)

(54) Verfahren zur Funkübertragung digitaler Informationen mittels einer Übertragungsfrequenz.

(57) Es wird ein Verfahren zur Funkübertragung digitaler Information mittels einer einzigen Übertragungsfrequenz vorgeschlagen, wobei die beteiligten Sende-Empfänger eine Mikrorechnersteuerung (14) aufweisen. Ein zu übertragender Daten-Block (B1) wird von einem ersten Sende-Empfänger (F1) auf einen zweiten, als Relaisstation verwendeten Sende-Empfänger (F2) übertragen. Dieser zweite Sende-Empfänger sendet einen entsprechenden Daten-Block (B'1) an einen dritten Sende-Empfänger (F3) und vorzugsweise auch als Quittung an den ersten Sende-Empfänger (F1). Der dritte Sende-Empfänger (F3) quittiert den Empfang des Daten-Blocks dem ersten Sende-Empfänger (F1) über den zweiten Sende-Empfänger (F2). Auf diese Weise wird durch Zwischenspeicherung von Daten ein Relaisbetrieb zwischen mehreren Sende-Empfängern über eine einzige Übertragungsfrequenz ermöglicht.

Fig. 2

9/82
EK/PLI Ve/Li
16. 2. 1982

ROBERT BOSCH GMBH, 7000 Stuttgart 1

Verfahren zur Funkübertragung digitaler
Informationen mittels einer Übertragungsfrequenz

Stand der Technik

Die Erfindung geht aus von einem Verfahren zur Funkübertragung nach der Gattung des Hauptanspruchs.

Ein solches Verfahren ist zum Beispiel schon aus der
DE-OS 29 01 798 oder der DE-OS 30 05 612 bekannt und
auch schon unter der Bezeichnung "Infoprint", KF 161
bis 163, im Handel erhältlich (BOSCH). Die Funkübertragung digitaler Informationen hat den Vorteil, daß
der Funkkanal nur sehr kurz beansprucht wird. Dabei
werden die digitalen Nachrichten gewöhnlich über
eine Tastatur in den Sender eingegeben, in Form von
Daten-Blöcken, die eine Empfängeradresse aufweisen,
an den Empfänger gesendet und dort über ein Datensichtgerät oder einen Drucker aufgezeichnet. Jede
feste oder mobile Funkstelle besteht dabei aus einem
Sende-Empfänger, der einen Mikrorechner mit entsprechenden Datenspeichern aufweist. Die Daten-Blöcke
werden von der empfangenden Funkstelle durch Rückübertragung einer Quittung abgesichert. Bei Ausbleiben einer Quittung wird der Daten-Block wiederholt
ausgesendet.

Gehören mehrere, insbesondere mobile Funkstellen zu
einem Funknetz, so ist es weiterhin bekannt, bei Absendung eines Daten-Blocks an eine weiter entfernte
Funkstelle eine dazwischen liegende Funkstelle als Relaisstation zu verwenden. Die bekannten Funkanlagen müssen dabei jedoch mit zwei Frequenzen arbeiten, um einen einwandfreien Relaisbetrieb zu gewährleisten.

Vorteile der Erfindung

Das erfindungsgemäße Verfahren mit den kennzeichnenden Merkmalen des Hauptanspruchs hat demgegenüber den Vorteil, daß beliebige, in Reihe geschaltete Funkstellen als Relaisstationen eingesetzt werden und dabei dennoch nur eine einzige Frequenz (Simplex-Kanal) verwendet wird. Dadurch ist eine praktisch beliebige Steigerung der Reichweite möglich. Bei einer großen Zahl mobiler Funkstellen können in Verbindung mit Standortbestimmungen günstig positionierte Fahrzeuge automatisch Relaisfunktion übernehmen und somit die Reichweite erheblich steigern. Die vorhandene Hardware bisheriger Anlagen kann praktisch ohne Änderung verwendet werden.

Durch die in den Unteransprüchen aufgeführten Maßnahmen sind vorteilhafte Weiterbildungen und Verbesserungen des im Hauptanspruch angegebenen Verfahrens möglich. Eine besonders sichere Datenübertragung erfolgt dadurch, daß die als Relaisstation verwendete Funkstelle nach Empfang der Quittung durch den eigentlichen Empfänger diese Quittung sowohl gegenüber dem Sender der Information als auch gegenüber dem endgültigen Empfänger quittiert.

Weiterhin ist es besonders vorteilhaft, daß die als Relaisstation verwendete Funkstelle beim Ausbleiben einer Quittung durch den endgültigen Empfänger oder der nächsten Relaisstation innerhalb eines vorgesehenen Zeitintervalls die Aussendung der Information wiederholt.

Zeichnung

Ein Ausführungsbeispiel der Erfindung ist in der Zeichnung
dargestellt und in der nachfolgenden Beschreibung näher erläutert. Es zeigen

Fig. 1   das Ausführungsbeispiel im Blockschaltbild,

Fig. 2   ein Signaldiagramm zur Erläuterung der
         Wirkungsweise mit einer Relaisstation im
         ungestörten Betrieb und

Fig. 3   ein Signaldiagramm zur Erläuterung der
         Wirkungsweise mit einer Relaisstation und
         gestörtem Betrieb.

Beschreibung des Ausführungsbeispiels

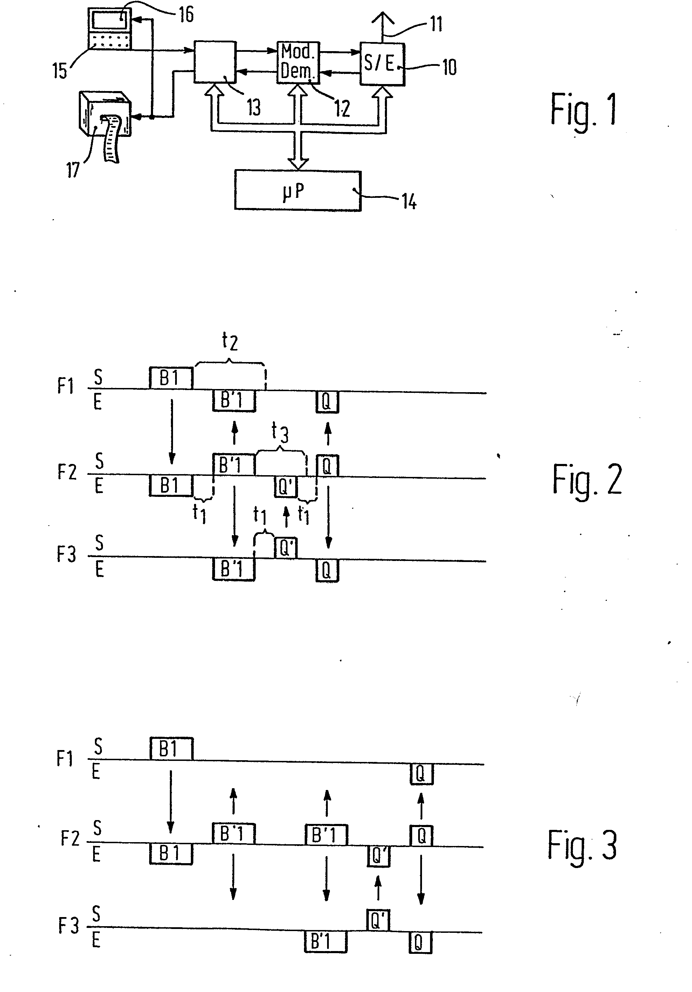

Das in Fig. 1 dargestellte Blockschaltbild zeigt einen festen
oder mobilen Sende-Empfänger (Funkstelle). Ein Sende/Empfangs-
Teil 10 ist mit einer Antenne 11 verbunden. Dieses Sende/
Empfangs-Teil 10 ist über einen Datenmodulator/Demodulator 12
mit einem Speicher 13 verbunden, wobei die drei genannten
Blöcke 10, 12, 13 durch einen Mikroprozessor 14 gesteuert
werden. Eine mit einem Datensichtgerät 16 verbundene Tastatur 15 ermöglicht das Eingeben von zu sendenden digitalen
Informationen in den Speicher 13. Andererseits können empfangene Informationen aus dem Speicher 13 auf das Datensichtgerät 16 oder einen Drucker 17 gegeben werden. Die prinzipiellen Funktionen des dargestellten Ausführungsbeispiels
sind Stand der Technik und bereits gemäß dem eingangs angegebenen Stand der Technik realisiert. Das neue Verfahren zur
digitalen Informationsübertragung über wenigstens eine Relaisstation mittels einer einzigen Frequenz wird im folgenden anhand der in den Fig. 2 und 3 dargestellten Signaldiagramme
näher erläutert.

Von einer ersten Funkstelle F1 soll ein Daten-Block B1 an eine Funkstelle F3 übertragen werden. Der Daten-Block B1 enthält dabei die Ausgangsadresse des Absenders F1, die Zieladresse F3 und gegebenenfalls die Adresse der Relaisstation (Funkstelle F2), sofern eine bestimmte Relaisstation angesprochen werden soll. Die Funkstellen F1 bis F3 sind jeweils entsprechend Fig. 1 aufgebaut. Die Funkstelle F2 empfängt den Daten-Block B1 und sendet einen entsprechenden Daten-Block B'1 nach einer Verzögerungszeit $t_1$ sowohl an die Ausgangsadresse F1 als auch an die Zieladresse F3 ab. Die Ausgangsadresse F1 erkennt diesen rückgesendeten Daten-Block B'1 als Quittung, daß die Relaisstation F2 den Daten-Block B1 empfangen und weitergesendet hat. Die Funkstelle F3 (Zieladresse) sendet nach einer kurzen Verzögerungszeit $t_1$ eine Quittung Q' an die Relaisstation F2 zurück, die dort als Quittung akzeptiert wird, sofern sie innerhalb einer Zeit $t_3$ eingeht. Ist dies der Fall, so wird von der Relaisstation aus nach einer Verzögerungszeit $t_1$ eine endgültige Quittung Q sowohl an die Ausgangsadresse F1 als auch an die Zieladresse F3 abgesendet, wobei mit dem Empfang dieser Quittungen Q der Übertragungsvorgang abgeschlossen ist. Es versteht sich, daß die jeweils empfangenen Daten-Blöcke in den Funkstellen zwischengespeichert werden müssen (im Speicher 13), bevor eine Weitersendung möglich ist.

In Fig. 3 ist nun der Fall dargestellt, daß die Übertragung nicht einwandfrei funktioniert. Die Relaisstation F2 empfängt zwar den Daten-Block B1 noch einwandfrei, jedoch wird die Absendung eines entsprechenden Daten-Blocks B'1 weder von der Ausgangsadresse F1 noch von der Zieladresse F3 empfangen. Da die Relaisstation innerhalb der vorgesehenen Wartezeit $t_3$ keine Quittung empfängt, wird der Daten-Block B'1 erneut abgesendet. Dieses Mal wird er von der Zieladresse F3, jedoch nicht von der Ausgangsadresse F1 empfangen. Von der Zieladresse F3 wird - wie in Fig. 2 beschrieben - eine
Quittung Q' an die Relaisstation zurückgesendet, die
dann eine endgültige Quittung sowohl an die Ausgangsadresse F1 als auch an die Zieladresse F3 absendet.
Während die Zieladresse F3 die Störung gar nicht bemerkt hat, wurde in der Ausgangsadresse F1 durch das
Ausbleiben der Quittung B'1 zwar eine Störung bemerkt,
jedoch wurde durch den Empfang der endgültigen Quittung Q erkannt, daß der Daten-Block B1 die Zieladresse F3 erreicht hat. Würde die endgültige Quittung Q
die Ausgangsadresse F1 nicht erreichen, so würde nach
einer festzulegenden Zeit ein erneuter Daten-Block B1
von der Ausgangsadresse F1 abgesendet werden. Mit dem
Empfang der Quittung Q' in der Relaisstation F2 wird
der Daten-Block B1 bzw. B'1 im Speicher dieser Funkstelle gelöscht.

Das Ausführungsbeispiel zeigt zwar nur den Betrieb mit
einer einzigen Relaisstation F2, jedoch ist es nach
diesem Verfahren ohne weiteres möglich, mehrere Relaisstationen zwischen der Ausgangsadresse und der Zieladresse zu schalten. Dies kann gezielt oder automatisch
erfolgen. Dabei bedeutet automatisch, daß jede Funkstelle,
die den Daten-Block B1 empfängt, sich als Relaisstation
einschaltet und den Daten-Block weitergibt.

9/82
EK/PLI Ve/Li
16.2.1982

ROBERT BOSCH GMBH, 7000 Stuttgart 1

Ansprüche

1. Verfahren zur Funkübertragung digitaler Informationen
   mittels einer Übertragungsfrequenz, wobei die beteiligten
   Sende-Empfänger eine Mikrorechnersteuerung aufweisen,
   dadurch gekennzeichnet, daß ein zu übertragender Daten-
   Block (B1) von einem ersten Sende-Empfänger (F1) auf
   einen zweiten, als Relaisstation verwendeten Sende-
   Empfänger (F2) übertragen wird, daß dieser zweite Sende-
   Empfänger (F2) einen entsprechenden Daten-Block (B'1) an
   einen dritten Sende-Empfänger (F3) überträgt und daß
   dieser dritte Sende-Empfänger (F3) den Empfang dem ersten
   Sende-Empfänger (F1) über den zweiten Sende-Empfänger (F2)
   quittiert.

2. Verfahren nach Anspruch 1, dadurch gekennzeichnet, daß
   der durch den zweiten Sende-Empfänger (F2) abgesendete
   Daten-Block (B'1) zusätzlich an den ersten Sende-Empfänger
   (F1) als Quittung abgesendet wird.

3. Verfahren nach Anspruch 1 oder 2, dadurch gekennzeichnet,
   daß der zweite Sende-Empfänger (F2) nach Empfang der
   Quittung vom dritten Sende-Empfänger (F3) diese sowohl
   gegenüber dem ersten (F1) als auch gegenüber dem dritten
   Sende-Empfänger (F3) quittiert.

4. Verfahren nach einem der vorhergehenden Ansprüche, dadurch
   gekennzeichnet, daß der zweite Sende-Empfänger (F2) bei
   Ausbleiben einer Quittung innerhalb eines vorgesehenen
   Zeitintervalls ($t_3$) die Aussendung des Daten-Blocks (B'1)
   wiederholt.

5. Verfahren nach einem der vorhergehenden Ansprüche,
   dadurch gekennzeichnet, daß weitere Sende-Empfänger
   im Relaisbetrieb hintereinandergeschaltet sind.

Fig. 1

Fig. 2

Fig. 3